# EUROPÄISCHE PATENTSCHRIFT

(11) **EP 4 179 929 B1**
(45) Veröffentlichungstag und Bekanntmachung des Hinweises auf die Patenterteilung: **26.02.2025**
(21) Anmeldenummer: 21208127.7
(22) Anmeldetag: 15.11.2021
(51) Int. Cl.: A47J 36/32, A47J 43/046, F24C 7/08, G01K 1/024

(54) **SYSTEM UND VERFAHREN FÜR EINE SPEISENZUBEREITUNG**
SYSTEM AND METHOD FOR FOOD PREPARATION
SYSTÈME ET PROCÉDÉ DE PRÉPARATION DES ALIMENTS

(43) Veröffentlichungstag der Anmeldung: 17.05.2023
(73) Patentinhaber: Vorwerk & Co. Interholding GmbH, 42275 Wuppertal (DE)
(72) Erfinder: Stein, Dr., Matthias, 45472 Mühlheim an der Ruhr (DE); Dering, Ingo, 42929 Wermelskirchen (DE)
(74) Vertreter: Gille Hrabal Partnerschaftsgesellschaft mbB Patentanwälte

(56) Entgegenhaltungen:
- EP-A1- 3 056 882
- EP-A1- 3 884 819
- CN-A- 111 449 493
- DE-A1- 102013 104 107

## Beschreibung

Die Erfindung betrifft ein System für die Zubereitung einer Speise. Das System umfasst eine Überwachungseinrichtung für die Zubereitung der Speise durch ein Küchengerät und eine Steuereinrichtung für die Zubereitung der Speise mithilfe eines elektronisch gespeicherten Rezepts. Das System umfasst ein mobiles Gerät.

Die Erfindung betrifft außerdem ein Speisenthermometer und ein Verfahren.

Wird eine Speise aus Lebensmitteln hergestellt, so sind anfänglich regelmäßig viele Bearbeitungsschritte zeitnah nacheinander auszuführen. Für die Zubereitung von Koteletts kann es beispielsweise erforderlich sein, Knoblauch zu schälen und zu zerkleinern, Kräuter zu waschen und zu zerkleinern, zerkleinerte Kräuter zusammen mit dem zerkleinerten Knoblauch, Gewürzen und Öl zu mischen. Anschließend sind die Koteletts in die so zubereitete Marinade einzulegen. Ist dies geschehen, so kann anschließend eine Ruhephase von zum Beispiel 60 Minuten vorgesehen sein, um die Marinade einwirken zu lassen. Im Anschluss daran sind die Koteletts beispielsweise auf einem Grill zu erhitzen. Es sind also weitere Bearbeitungsschritte durchzuführen.

Bei der Zubereitung einer Speise gibt es also Zeiträume, die Tätigkeiten eines Menschen voraussetzen und damit seine Anwesenheit. Es kann außerdem Zeiträume geben, die keine Tätigkeit des Menschen erfordern. Der Mensch kann dann abwesend sein, d. h., er muss sich nicht in der Nähe der Koteletts aufhalten. Nachfolgend wird dieser Mensch "Benutzer" genannt.

Um einen Benutzer bei der Zubereitung einer Speise zu entlasten, gibt es Küchengeräte wie zum Beispiel Küchenmaschinen mit Speisenzubereitungsgefäßen und Heizeinrichtungen. Küchenmaschinen können den Automatisierungsgrad bei der Zubereitung einer Speise steigern. So kann eine Steuereinrichtung einer Küchenmaschine das Speisenzubereitungsgefäß der Küchenmaschine automatisiert temperieren. Es ist dann nicht erforderlich, dass ein Benutzer überwachen und ggfs. eingreifen muss, um zu hohe oder zu niedrige Temperaturen zu vermeiden. Ein Benutzer kann dann abwesend sein, wenn keine anderen Bearbeitungsschritte manuell durchzuführen sind. Ein gesteigerter Automatisierungsgrad erlaubt also längere Abwesenheitszeiten.

Um einem Benutzer eine Abwesenheit zu erleichtern, kann eine Küchenmaschine einen Timer und einen Lautsprecher umfassen. Es kann beim Timer beispielsweise die Zeit manuell oder automatisiert eingestellt werden, die für ein Temperieren einer Speise erforderlich ist. Ist der Timer abgelaufen, so wird dem Benutzer durch ein akustisches Signal das Erreichen des Endes einer Garzeit signalisiert. Ein Benutzer kann dann zwar abwesend sein. Er muss sich aber in Hörweite befinden, um das Signal hören zu können.

Die Publikation EP 3056 882 A1 offenbart ein Verfahren zur Messung einer Temperatur innerhalb eines Küchengeräts unter Verwendung eines im Gargut angeordneten Temperatursensors. Die Veröffentlichung CN 111 449 493 A beschreibt eine Struktur zur Messung einer Temperatur mit einem Topfdeckel, in dem ein Temperatursensor, ein Bluetooth-Modul, eine Batterie und eine Ladeschaltung angeordnet sind.

Es ist Aufgabe der Erfindung, einen Benutzer, der eine Speise zubereiten will, zu entlasten.

Zur Lösung der Aufgabe umfasst ein System die Merkmale des ersten Anspruchs. Ein Verfahren umfasst zur Lösung der Aufgabe die Merkmale des Nebenanspruchs. Vorteilhafte Ausgestaltungen umfassen die Merkmale der abhängigen Ansprüche.

Zur Lösung der Aufgabe ist ein System für die Zubereitung einer Speise mit einer Überwachungseinrichtung für die Überwachung der Speise vorhanden. Das System umfasst eine Steuereinrichtung für die Zubereitung der Speise mithilfe eines Küchengeräts und mithilfe eines elektronisch gespeicherten Rezepts. Das System umfasst ein Gerät und zwar insbesondere ein mobiles Gerät. Das System kann auch sowohl das mobile Gerät als auch das nicht mobile Gerät umfassen. Die Überwachungseinrichtung kann mit der Steuereinrichtung und dem vorzugsweise mobilen Gerät kommunizieren. Das vorzugsweise mobile Gerät kann Informationen der Überwachungseinrichtung an einen Benutzer übermitteln. Durch das System wird erreicht, dass eine Speise mit hohem Automatisierungsgrad zubereitet werden kann. Je höher ein Automatisierungsgrad ist, umso weniger muss ein Benutzer während der Zubereitung einer Speise anwesend sein. Um die Zeiträume zu maximieren, die eine Abwesenheit eines Benutzers erlauben, umfasst das System das mobile Gerät. Durch das mobile Gerät kann sich auch ein abwesender Benutzer über den Zustand einer Speisenzubereitung informieren. Der Benutzer kann dadurch verbessert einschätzen, wann seine Anwesenheit während der Zubereitung einer Speise wieder erforderlich ist. Durch die Erfindung kann also eine Abwesenheit erleichtert werden. Insbesondere muss sich ein Benutzer nicht in Hörweite befinden.

Speisen werden aus Lebensmitteln hergestellt. Für die Zubereitung einer Speise werden ein oder mehrere Lebensmittel bearbeitet. Das Bearbeiten kann ein mechanisches Bearbeiten von Lebensmitteln umfassen, wie zum Beispiel das Mischen, Rühren und/oder Zerkleinern von Lebensmitteln. Das Bearbeiten kann die Zufuhr von Wärme umfassen. Wärme kann beispielsweise Fleisch, Gemüse, Aufläufe oder Teig für Backwaren zugeführt werden, um eine Speise herzustellen oder zur Herstellung einer Speise beizutragen.

Das Küchengerät ist ein stationäres Gerät, welches beispielsweise in einer Küche für die Zubereitung einer Speise aufgestellt wird. Das Küchengerät ist ein Gerät, welches zur Zubereitung einer Speise beitragen kann und soll. Das Küchengerät umfasst grundsätzlich ein Gefäß oder einen Raum, in dem eine Speise zubereitet werden kann. Das Küchengerät kann ein Werkzeug umfassen, mit dem Lebensmittel bearbeitet werden können. Das Werkzeug kann ein Mischwerkzeug und/oder ein Schneidwerkzeug für ein Rühren, Mischen und/oder Zerkleinern von Lebensmitteln sein. Das Küchengerät kann eine Temperiereinrichtung umfassen, mit der Lebensmittel für ein Zubereiten einer Speise temperiert werden können. Das Temperieren kann ein Heizen oder Kühlen umfassen. Das Küchengerät kann eine Dampferzeugungseinrichtung umfassen, um Lebensmittel mithilfe von Wasserdampf bearbeiten zu können.

Die Überwachungseinrichtung umfasst ein oder mehrere Detektoren, mit denen die Zubereitung einer Speise überwacht werden kann. Ein Detektor kann beispielsweise ein Temperatursensor, ein optischer Sensor, ein Feuchtigkeitssensor oder ein Gewichtssensor sein. Die Überwachungseinrichtung überwacht ein oder mehrere Zustände, die in der Speise oder in der Umgebung der Speise herrschen. Die Überwachungseinrichtung kann also beispielsweise Temperaturen, optische Zustände, Feuchtigkeit oder Gewicht während der Zubereitung einer Speise überwachen. Die Überwachungseinrichtung kann also beispielsweise eine Kamera sein, mit der eine Speise während der Zubereitung optisch überwacht werden kann.

Die Steuereinrichtung kann mithilfe eines elektronisch gespeicherten Rezepts die Zubereitung einer Speise steuern. Die Steuereinrichtung kann ein Computer sein, der so programmiert und eingerichtet ist, dass dieser die Zubereitung einer Speise steuern kann. Das Rezept kann in einem Speicher der Steuereinrichtung gespeichert sein. Das Rezept kann in einem externen Speicher gespeichert sein. Die Steuereinrichtung kann so eingerichtet sein, dass diese beispielsweise über das Internet auf das extern gespeicherte Rezept zugreifen kann.

Ein Rezept umfasst eine Mehrzahl von Schritten zum Bearbeiten von Lebensmitteln für eine Speise. Ein Schritt kann beispielsweise sein, 500g Kartoffeln abzuwiegen. Ein anderer Schritt kann sein, die 500g Kartoffeln mithilfe des Küchengeräts zu schälen. Ein anderer Schritt kann sein, die geschälten Kartoffeln zusammen mit weiteren Zutaten wie Gewürze, Sahne und Käse in ein Backgefäß einzufüllen. Ein weiterer Schritt kann darin bestehen, einen Backofen vorzuheizen. Ein weiterer Schritt kann darin bestehen, das Backgefäß mit den Kartoffeln und den weiteren Zutaten in den vorgeheizten Backofen zu stellen. Ein weiterer Schritt kann darin bestehen, das Backgefäß mit den Kartoffeln und den weiteren Zutaten im Backofen 30 Minuten lang Wärme zuzuführen. Das Rezept verdeutlicht auch, dass für die Zubereitung einer Speise mehrere verschiedene Küchengeräte erforderlich sein können.

Die Steuereinrichtung kann die Durchführung der Schritte steuern. Die Steuereinrichtung kann beispielsweise zur Steuerung eine Handlungsanweisung an einen Benutzer akustisch über einen Lautsprecher und/oder optisch über einen Bildschirm ausgegeben. Die Handlungsanweisung kann sein, 500g Kartoffeln in einem Gefäß eines Küchengeräts abzuwiegen, das Kartoffeln wiegen und schälen kann. Der Lautsprecher und/oder der Bildschirm können Teil der Steuereinrichtung sein. Die Steuereinrichtung kann beispielsweise das Schälen der Kartoffeln steuern, indem die Steuereinrichtung eine Drehzahl und eine Drehdauer des Schälwerkzeugs des Küchengeräts automatisiert einstellt und/oder das Schälwerkzeug automatisiert stoppt, wenn das Ende der Schäldauer erreicht ist. Die Steuereinrichtung kann beispielsweise auch ein weiteres Küchengerät steuern wie zum Beispiel die Temperatur in dem vorgenannten Backofen.

Die Überwachungseinrichtung kann mit der Steuereinrichtung kommunizieren. Die Kommunikation kann das Übermitteln von detektierten Werten von der Überwachungseinrichtung an die Steuereinrichtung umfassen. Die Kommunikation kann drahtlos erfolgen.

Das mobile Gerät ist dafür bestimmt und geeignet, dass dieses von einem Benutzer getragen werden kann oder zumindest an einem frei wählbaren Ort aufgestellt werden kann. Das mobile Gerät wird also in der Regel nicht in einer Küche aufgestellt, in der sich das Küchengerät für die Speise befindet. Ein Mobilfunktelefon wie zum Beispiel ein Smartphone ist ein Beispiel für ein mobiles Gerät. Ein anderes Beispiel für ein mobiles Gerät ist ein Assistenzlautsprecher, der eine Sprachsteuerung erlaubt.

Ein mobiles Gerät umfasst in der Regel eine integrierte Stromversorgung. Die integrierte Stromversorgung kann eine Batterie sein. Durch die integrierte Stromversorgung wird erreicht, dass das mobile Gerät ortsunabhängig elektrisch betrieben werden kann.

Die Überwachungseinrichtung kann mit dem vorzugsweise mobilen Gerät kommunizieren. Die Kommunikation kann das Übermitteln von detektierten Werten von der Überwachungseinrichtung an die Steuereinrichtung umfassen. Die Kommunikation kann das Übermitteln von Herstellerinformationen von der Überwachungseinrichtung an die Steuereinrichtung umfassen. Die Kommunikation zwischen dem vorzugsweise mobilen Gerät und der Überwachungseinrichtung erfolgt vorzugsweise drahtlos. Umgekehrt kann die Kommunikation umfassen, dass die Steuereinrichtung den Beginn und/oder das Ende von Messungen und des Versendens von Messwerten durch die Überwachungseinrichtung steuert.

Ein mobiles Gerät umfasst eine Ausgabeeinrichtung, um einen Zustand ausgeben zu können, der von der Überwachungseinrichtung detektiert und an das mobile Gerät übermittelt worden ist. Die Ausgabeeinrichtung kann ein Lautsprecher oder eine optische Signaleinrichtung sein. Die optische Signaleinrichtung kann beispielsweise ein oder mehrere Leuchtdioden umfassen. Die optische Signaleinrichtung kann ein Display sein.

Die Steuereinrichtung ist so eingerichtet, dass diese während der gesteuerten Zubereitung einer Speise mögliche Abwesenheitszeiten für einen Benutzer erkennen und den Benutzer darüber informieren kann. Abwesenheitsmöglichkeiten können so verbessert genutzt werden. Ein Benutzer wird so weiter verbessert entlastet.

Gesteuerte Zubereitung meint, dass die Zubereitung mithilfe eines elektronisch gespeicherten Rezepts durchgeführt wird. Ein Bearbeitungsschritt eines Rezepts kann eine Information umfassen, ob für die Bearbeitung ein Benutzer erforderlich ist oder nicht. Ein Bearbeitungsschritt eines Rezepts kann eine Information umfassen, wieviel Zeit für die Durchführung des Bearbeitungsschrittes erforderlich ist. Die Steuereinrichtung ist in der Lage, diese Informationen auszuwerten und so zu erkennen, sobald die Anwesenheit eines Benutzers für die Zubereitung der Speise nicht erforderlich ist. Die Steuereinrichtung kann aufgrund dieser Informationen berechnen, wie lange ein Benutzer abwesend sein kann. Die Steuereinrichtung kann einen Benutzer beispielsweise dann informieren, dass er abwesend sein kann, sobald der Zeitraum einer möglichen Abwesenheit einen vorgegebenen Schwellwert überschreitet.

Beispielsweise umfasst die Zubereitung einer Speise, dass einerseits ein Lammrücken 40 Minuten lang in einem Backofen bei einer Temperatur von 160°C gegart wird und andererseits ein Fond 20 Minuten lang in einem Gefäß einer Küchenmaschine durch Erhitzen bei 98°C reduziert wird. Beide Schritte werden derart automatisiert und/oder überwacht durchgeführt, dass eine Anwesenheit eines Benutzers nicht erforderlich ist. Die Steuereinrichtung ermittelt aus diesen Informationen im Fall eines zeitgleichen Beginns der beiden Schritte, dass ein Benutzer 20 Minuten lang abwesend sein kann. Es ist beispielsweise in der Steuereinrichtung ein Schwellwert von beispielsweise 10 Minuten gespeichert. Da 20 Minuten oberhalb des Schwellwertes liegen, informiert die Steuereinrichtung den Benutzer, dass er abwesend sein kann. Vorzugsweise informiert die Steuereinrichtung den Benutzer dann auch über die zeitliche Dauer seiner möglichen Abwesenheit. Der Benutzer wird also beim genannten Beispiel darüber informiert, dass er 20 Minuten lang abwesend sein kann. Die Information kann akustisch über einen Lautsprecher erfolgen oder optisch über ein Display. Lautsprecher und Display können Teil der Steuereinrichtung sein. Der Benutzer kann sich im Anschluss daran entfernen und über das mobile Gerät Zustände während der Speisenzubereitung dennoch überwachen. Überwacht die Überwachungseinrichtung die Temperatur im Backofen und/oder die Temperatur im Lammrücken und/oder die Temperatur im Gefäß der Küchenmaschine, so kann der Benutzer die ein oder mehreren Temperaturen trotz seiner Abwesenheit beim Ort der Speisenzubereitung überwachen. Überwacht die Überwachungseinrichtung andere ein oder mehrere Zustände, so kann der Benutzer trotz seiner Abwesenheit beim Ort der Speisenzubereitung andere ein oder mehrere Zustände überwachen.

Die Überwachungseinrichtung kann ein mobil verwendbares Speisenthermometer sein.

Das Speisenthermometer ist ein Temperaturmessgerät, welches dafür bestimmt und geeignet ist, Temperaturen in einer Speise während der Zubereitung der Speise zu messen. Das Speisenthermometer kann daher Temperaturen messen, die bei der Zubereitung einer Speise auftreten können. Deutlich davon abweichende Temperaturen können nicht gemessen werden. Außerdem ist das Speisenthermometer den Umgebungsbedingungen gewachsen, die während einer Zubereitung einer Speise auftreten können.

In der Regel werden bei der Zubereitung einer Speise Temperaturen von weniger als 220°C erreicht. Es können aber auch Temperaturen von 350°C erreicht werden, so zum Beispiel für das Backen einer Pizza. Temperaturen von mehr als 350°C werden grundsätzlich nicht überschritten. Das Speisenthermometer im Sinne der vorliegenden Erfindung ist daher so eingerichtet, dass Temperaturen oberhalb von 400°C, vorzugsweise oberhalb von 300°C, besonders bevorzugt oberhalb von 250°C, nicht mehr gemessen werden können. Grundsätzlich ist das Speisenthermometer so eingerichtet, dass dieses in einem herkömmlichen Backofen eingesetzt werden kann, also bei Temperaturen von bis zu 250°C oder zumindest bis zu 220°C.

Das Speisenthermometer ist nicht so ausgelegt, dass sehr tiefe Temperaturen damit gemessen werden können wie zum Beispiel Temperaturen unterhalb von Minustemperaturen, wie diese in haushaltsüblichen Gefriertruhen oder Gefrierschränken erreicht werden. Ein Speisenthermometer im Sinne der vorliegenden Erfindung ist daher grundsätzlich nicht so ausgelegt, dass es Temperaturen von weniger als -70°C messen kann. Vorzugsweise ist ein Speisenthermometer im Sinne der vorliegenden Erfindung so ausgelegt, dass es Temperaturen unterhalb von -50°C nicht mehr messen kann, weil Speisen in der Regel unter Zufuhr von Wärme hergestellt werden und sehr tiefe Temperaturen lediglich für ein Einfrieren einer Speise angewendet werden.

Das Speisenthermometer kann einer Dampfatmosphäre widerstehen. Das Speisenthermometer ist daher grundsätzlich wasserdicht gekapselt. Das Speisenthermometer ist resistent gegenüber üblichen Zutaten einer Speise wie zum Beispiel Säure von Zitronen oder Essig.

Das Speisenthermometer ist körperlich von den anderen Geräten des Systems getrennt. Es kann daher mobil verwendet werden. Das Speisenthermometer kann daher sowohl in einem Backofen als auch in einem anderen Gefäß eines Küchengeräts verwendet werden, um Temperaturen messen zu können. In einer alternativen Ausführungsform könnte die Überwachungseinrichtung in einem Speisezubereitungsgefäß integriert sein. Das Speisenzubereitungsgefäß kann beispielsweise eine Bratpfanne sein.

Das Speisenthermometer verfügt über eine Funkeinheit. Aufgrund der Funkeinheit kann das Speisenthermometer mit dem vorzugsweise mobilen Gerät und mit der Steuereinrichtung kommunizieren. Beispielsweise kann Bluetooth Low Energy als Funktechnik eingesetzt sein, damit der Stromverbrauch des Speisenthermometers geringgehalten werden kann. Es ist aber auch Wifi oder Ultra Wideband (UWB) möglich, was aber zu einem höheren Stromverbrauch führt.

Das Speisenthermometer verfügt über vorzugsweise eine interne Stromversorgung, um unproblematisch mobil verwendet werden zu können.

Das Speisenthermometer verfügt vorzugsweise über zwei räumlich getrennte Temperatursensoren. Wird das Speisenthermometer in eine Speise hineingesteckt, dann kann mit dem einen Temperatursensor die in der Speise herrschende Temperatur gemessen werden. Mit dem anderen Temperatursensor kann die Umgebungstemperatur gemessen werden. Insgesamt können so Temperaturverläufe genauer bestimmt werden, was die Zubereitung einer Speise verbessern kann. Der Abstand zwischen den beiden Temperatursensoren kann wenigstens 5 cm betragen, um geeignet räumlich getrennt Temperaturen messen zu können.

Damit das Speisenthermometer in eine Speise leicht hineingesteckt werden kann, verfügt das Speisenthermometer vorzugsweise über ein spitzes Ende. Vorzugsweise befindet sich beim spitzen Ende ein Temperatursensor, um die Temperatur im Inneren einer Speise messen zu können. Ein zweiter Temperatursensor ist dann zweckmäßig in der Hälfte des Speisenthermometer angeordnet, die von der Spitze entfernt liegt. Mit dem zweiten Temperatursensor kann dann eine Umgebungstemperatur gemessen werden, wenn die Spitze in eine Speise hineingesteckt worden ist.

Das System kann eine Küchenmaschine umfassen. Die Küchenmaschine umfasst ein Speisenzubereitungsgefäß, das in ein Standteil der Küchenmaschine eingesetzt werden kann. Durch das Standteil kann und soll die Küchenmaschine auf einen Untergrund gestellt werden. Das in das Standteil eingesetzte Speisenzubereitungsgefäß kann aus dem Standteil auch wieder entnommen und dann mobil unabhängig vom Standteil verwendet werden. Die Küchenmaschine umfasst ein Misch- und/oder Schneidwerkzeug, das in dem Speisenzubereitungsgefäß befindliche Lebensmittel mischen und/oder zerkleinern kann.

Die Küchenmaschine kann eine Heizeinrichtung umfassen, mit der ein im Speisenzubereitungsgefäß befindliches Lebensmittel erhitzt werden kann. Die Heizeinrichtung ist vorzugsweise eine elektrische Heizeinrichtung. Beispielsweise das Speisenzubereitungsgefäß kann elektrische Heizleiter umfassen, mit der Lebensmittel in dem Speisenzubereitungsgefäß elektrisch erhitzt werden können.

Die Küchenmaschine kann eine Waage umfassen, mit der Lebensmittel in dem Speisenzubereitungsgefäß gewogen werden können. Die Küchenmaschine kann ein berührungsempfindliches Display fassen, über das die Küchenmaschine gesteuert werden kann. Über das Display können außerdem Zustände angezeigt werden, die während der Zubereitung einer Speise bei der Küchenmaschine auftreten oder bei einem anderen Küchengerät. Die Küchenmaschine kann einen Lautsprecher umfassen, um beispielsweise Zustände akustisch ausgeben zu können. Die Küchenmaschine kann ein Mikrofon umfassen, um über Sprachbefehle Eingaben machen zu können.

Die Küchenmaschine verfügt vorzugsweise über eine Funkeinheit. Die Funkeinheit kann Bluetooth Low Energy und/oder Ultra Wideband als Funktechnik umfassen. Da die Küchenmaschine ein stationäres Gerät ist, kann dieses unproblematisch über eine externe Stromquelle mit elektrischer Energie versorgt werden. Es ist daher nicht auf einen sehr geringen Stromverbrauch zu achten, um lange Betriebsdauern zu ermöglichen. Die Küchenmaschine kann daher als Funkstandard alternativ oder ergänzend Wi-Fi umfassen, um beispielsweise über das Internet auf elektronisch gespeicherte Rezepte zugreifen zu können.

Die Küchenmaschine kann ein Thermometer umfassen, mit dem eine Temperatur im Speisenzubereitungsgefäß gemessen werden kann.

Die Küchenmaschine kann ein oder mehrere mechanische Bedienelemente umfassen. Als mechanisches Bedienelement kann ein Drehknopf vorhanden sein, mit dem durch Drehen beispielsweise Drehgeschwindigkeiten des dann drehbaren Misch- und/oder Schneidwerkzeugs eingestellt werden können. Alternativ oder ergänzend können Solltemperaturen eingestellt werden, die in dem Speisenzubereitungsgefäß erreicht und gesteuert durch die Steuereinrichtung gehalten werden können.

Die Steuereinrichtung kann in die Küchenmaschine integriert sein. Die Steuereinrichtung befindet sich grundsätzlich im Standteil der Küchenmaschine. Die Zahl der Geräte des Systems kann so geringgehalten werden. Dennoch ist das System dann leistungsfähig und ermöglicht eine Vielzahl von Zubereitungsmöglichkeiten.

Als mechanisches Bedienelement kann ein Druckknopf vorhanden sein. Durch Drücken des Druckknopfes kann beispielsweise ein Bearbeitungsschritt gestartet oder eine Eingabe bestätigt werden.

Vorzugsweise ist ein Knopf vorhanden, der sowohl gedreht als auch gedrückt werden kann, um die Zahl der Bedienelemente aus Gründen der Übersichtlichkeit gering zu halten.

Es kann ein Deckel für das Speisenzubereitungsgefäß vorhanden sein, um das Speisenzubereitungsgefäß während der Zubereitung einer Speise durch den Deckel teilweise oder vollständig verschließen zu können. Vorzugsweise kann der Deckel manuell oder automatisiert ver- und entriegelt werden. Im verriegelten Zustand kann der Deckel nicht vom Speisenzubereitungsgefäß gelöst werden.

Das System kann so eingerichtet sein, dass die Überwachungseinrichtung ausschließlich mit der Steuereinrichtung für ein Kommunizieren verbunden sein kann. Die Überwachungseinrichtung kann dann erst Daten an das mobile Gerät und/oder an ein anderes Gerät senden und/oder mit dem mobilen Gerät oder einem anderen Gerät für ein Kommunizieren verbunden werden, wenn die Steuereinrichtung dies freigibt. Es wird so vermieden, dass in die Zubereitung einer Speise versehentlich fehlerhaft eingegriffen werden kann. Es wird dadurch sichergestellt, dass es Phasen einer Speisenzubereitung geben kann, in die ausschließlich ein anwesender Benutzer bei Bedarf korrigierend eingreifen kann.

Ein Benutzer, der anwesend ist, kann zuverlässig beurteilen, ob ein Eingriff geboten ist. Selbst wenn dann ein Eingriff irrtümlich erfolgt, kann der anwesende Benutzer sofort korrigierende Maßnahmen umfassend ergreifen. Dazu ist ein nicht anwesender Benutzer nicht in der Lage.

Es kann ein Statusindikator bei der Überwachungseinrichtung vorhanden sein, durch den geregelt wird, ob nur eine Verbindung zu einem Gerät erlaubt ist. Der Statusindikator kann während einer bestehenden Verbindung so gesetzt sein, dass eine weitere Verbindung dadurch ausgeschlossen wird.

Es kann ein Statusindikator bei der Überwachungseinrichtung vorhanden sein, durch den geregelt wird, ob die Überwachungseinrichtung für ein Steuern der Überwachungseinrichtung frei ist.

Es kann ein Ladegerät für die Überwachungseinrichtung vorhanden sein. Die Überwachungseinrichtung kann so eingerichtet sein, dass das Laden einer Batterie der Überwachungseinrichtung bewirkt, dass ein oder beide Statusindikatoren so gesetzt werden, dass die Überwachungseinrichtung für ein Verbinden und/oder für ein Steuern frei ist.

Vorzugsweise ist die Steuereinrichtung so eingerichtet, dass diese die Möglichkeit einer Datenübertragung bzw. eines Verbindens zwischen der Überwachungseinrichtung und dem vorzugsweise mobilen Gerät freigibt, nachdem während der gesteuerten Zubereitung einer Speise eine mögliche Abwesenheitszeit für einen Benutzer durch die Steuereinrichtung erkannt worden ist. Es kann sein, dass ein Benutzer vor der Freigabe diese erst bestätigen muss. Das Bestätigen kann beispielsweise durch Betätigen eines Bedienelements der Steuereinrichtung erfolgen. Beispielsweise erkennt die Steuereinrichtung, dass ein Benutzer 20 Minuten lang abwesend sein kann und informiert deshalb den Benutzer, dass er nun abwesend sein kann. Der Benutzer betätigt daraufhin ein Bedienelement der Steuereinrichtung. Durch das Betätigen des Bedienelements bestätigt der Benutzer, dass er von der Möglichkeit der Abwesenheit Gebrauch machen will. Der Benutzer erteilt also die Freigabe durch Betätigen des Bedienelements. Daraufhin steuert die Steuereinrichtung das System und zwar in der Regel die Überwachungseinrichtung derart, dass sich die Überwachungseinrichtung mit dem mobilen Gerät und/oder einem anderen Gerät verbinden kann oder zumindest Daten an das mobile Gerät und/oder an ein anderes Gerät senden kann. Im Anschluss daran kann das mobile Gerät und/oder ein anderes Gerät Daten von der Überwachungseinrichtung empfangen. Mit "Daten von der Überwachungseinrichtung empfangen" ist gemeint, dass Daten so empfangen werden können, dass diese durch das empfangende Gerät verarbeitet werden können. Ein Verarbeiten kann darin bestehen, dass überwachte Zustände optisch auf dem empfangenden Gerät dargestellt werden können. Ein Verarbeiten kann darin bestehen, dass überwachte Zustände akustisch über das empfangende Gerät ausgegeben werden können. Ein Verarbeiten kann darin bestehen, dass eine Verbindung für ein Kommunizieren zwischen der Überwachungseinrichtung und dem empfangenden Gerät hergestellt wird. Ist eine Verbindung für ein Kommunizieren hergestellt, so kann das empfangende Gerät beispielsweise Zustandsinformationen bzw. Zustände vom Überwachungseinrichtung erhalten und/oder den Erhalt von Zustandsinformationen bzw. Zustände beim Überwachungseinrichtung anfordern.

Ein Bedienelement kann ein mechanisch zu betätigendes Bedienelement sein. Ein Bedienelement kann durch ein berührungsempfindliches Display bereitgestellt sein. Ein Bedienelement kann durch eine Spracheingabe realisiert sein.

In einer Ausgestaltung der Erfindung wird die Verbindung zwischen der Steuereinrichtung und der Überwachungseinrichtung beendet, wenn die Möglichkeit einer Datenübertragung bzw. eines Verbindens zwischen der Überwachungseinrichtung und dem vorzugsweise mobilen Gerät freigegeben wird. Hierdurch wird verbessert vermieden, dass ein Dritter beispielsweise versehentlich in Abwesenheit des Benutzers die Steuereinrichtung so bedient, dass die Zubereitung einer Speise fehlerhaft erfolgt. Beispielsweise hat ein Benutzer durch Betätigen eines Bedienelements der Steuereinrichtung die Freigabe bestätigt. Daraufhin beendet die Steuereinrichtung die Verbindung zwischen der Steuereinrichtung und der Überwachungseinrichtung. Die Überwachungseinrichtung ist dann so eingerichtet, dass das Beenden der Verbindung zwischen der Überwachungseinrichtung und der Steuereinrichtung zur Folge hat, dass sich das vorzugsweise mobile Gerät mit der Überwachungseinrichtung verbinden kann. Alternativ oder ergänzend kann das Beenden der Verbindung zwischen der Überwachungseinrichtung und der Steuereinrichtung zur Folge haben, dass Daten von der Überwachungseinrichtung versendet werden, die von dem vorzugsweise mobilen Gerät empfangen werden können. Das Versenden von Daten kann dann beispielsweise periodisch geschehen. Es können also beispielsweise alle zwei, drei oder vier Sekunden Daten versendet werden.

Die Steuereinrichtung kann so eingerichtet sein, dass diese steuern kann, welche Daten die Überwachungseinrichtung sendet. Vorzugsweise ist die Steuereinrichtung so eingerichtet, dass diese steuert, welche Daten von der Überwachungseinrichtung im Anschluss an eine Freigabe versendet werden. Diese Daten werden auch Nutzdaten oder Payload genannt. Insbesondere ist die Steuereinrichtung so eingerichtet, dass diese die Überwachungseinrichtung so steuert, dass im Anschluss an eine Freigabe geänderte Daten von der Überwachungseinrichtung versendet werden als vor der Freigabe. Beispielsweise besteht eine ausschließliche Verbindung zwischen der Überwachungseinrichtung und der Steuereinrichtung. Die Überwachungseinrichtung ist so eingerichtet, dass die Daten A und B von der Überwachungseinrichtung an die Steuereinrichtung beispielsweise periodisch gesendet werden. Die Steuereinrichtung stellt fest, dass eine Abwesenheit des Benutzers möglich ist und informiert den Benutzer. Im Anschluss daran bestätigt der Benutzer durch Betätigen eines Bedienelements der Steuereinrichtung die Freigabe. Daraufhin steuert die Steuereinrichtung die Überwachungseinrichtung derart, dass nun die Daten B und C von der Überwachungseinrichtung versendet werden. Die Überwachungseinrichtung übersendet dann zwar nach wie vor B, aber darüber hinaus wegen C auch andere Daten und damit geänderte Daten. Der Vorteil dieser Ausgestaltung besteht darin, dass auf geänderte Anforderungen reagiert werden kann. So kann es zweckmäßig sein, dass die Überwachungseinrichtung die gemessenen Temperaturen innerhalb einer Speise an die Steuereinrichtung (Daten A) übermittelt und außerdem die Temperaturen (Daten B), die im Gargefäß des entsprechenden Küchengeräts außerhalb der Speise gemessen werden. Diese Temperaturen können beispielsweise an die Steuereinrichtung gesendet werden, damit die Steuereinrichtung das Küchengerät besonders geeignet steuern kann. Wird schließlich erreicht, dass die im Gargefäß außerhalb der Speise herrschende Temperatur nur noch konstant gehalten werden muss und deshalb keine Steuerung durch die Steuereinrichtung mehr erforderlich ist, so kann dies zur Folge haben, dass die Steuereinrichtung den Benutzer informiert, dass er abwesend sein kann. Für den Benutzer ist es nun von Interesse, dass er durch das mobile Gerät nicht nur über Temperaturen informiert wird, sondern auch über das Ende der Garzeit. Das voraussichtliche Ende der Garzeit ist der Steuereinrichtung bekannt, da diese die Speisenzubereitung steuert. Die Steuereinrichtung steuert daher dann die Überwachungseinrichtung beispielsweise so, dass diese nicht nur noch gemessene Temperatur (Daten A und B) versendet, sondern außerdem die Zeit (Daten C) des voraussichtlichen Endes der Garzeit. Das voraussichtliche Ende der Garzeit ist also von der Steuereinrichtung an die Überwachungseinrichtung so übermittelt worden, dass im Anschluss daran die Überwachungseinrichtung das voraussichtliche Ende der Garzeit versendet. Die Steuereinrichtung kann also so eingerichtet sein, dass diese eine Information wie das voraussichtliche Ende der Garzeit an die Überwachungseinrichtung so übermitteln kann, dass die Überwachungseinrichtung die Information im Anschluss daran versendet oder zumindest versenden kann. Es kann aber auch sein, dass die Überwachungseinrichtung durch die Steuereinrichtung so gesteuert wird, dass nur noch außerhalb der Speise gemessene Temperaturen (Daten B) und das Ende der Garzeit (Daten C) an das mobile Gerät übermittelt werden.

Vorzugsweise bewirkt die Änderung der Daten, die von der Überwachungseinrichtung versendet wird, eine Reduzierung der Datenmenge. Die Datenmenge ist also vor der Änderung größer als die Datenmenge nach der Reduzierung. So kann vor der Reduzierung der Datenmenge ein individuell vom Benutzer festgelegter Name an die Steuereinrichtung versendet worden sein. Dies kann geschehen sein, damit ein Benutzer leichter erkennen kann, mit welchem Überwachungsgerät sich die Steuereinrichtung verbunden hat. Um die Datenmenge durch die Änderung zu reduzieren, kann im Anschluss an das Versenden auf das Versenden des Namens verzichtet werden. Die Reduzierung der Datenmenge macht es technisch einfacher, die Umstellung zu realisieren.

Die Daten, die nach einer Änderung versendet werden, sollten wenigstens die Messwerte der Überwachungseinrichtung, eine Zeit bis zum Erreichen des Endes der Abwesenheit und eine Statusinformation über die Überwachungseinrichtung umfassen. Ist die Überwachungseinrichtung ein Speisenthermometer mit zwei Temperatursensoren, dann werden die Messwerte der beiden Temperatursensoren von dem Speisenthermometer versendet.

Die Steuereinrichtung kann so eingerichtet sein, dass ein Ausschalten der Steuereinrichtung bewirkt, dass die Überwachungseinrichtung wie zuvor beschrieben von der Steuereinrichtung gesteuert wird. Es ist dadurch sichergestellt, dass nach einem Ausschalten der Steuereinrichtung dennoch eine Überwachung durch ein mobiles Gerät möglich ist.

Dieses Versenden durch die Überwachungseinrichtung kann geschehen, ohne dass dafür zuvor eine Verbindung zu einem mobilen Gerät aufgebaut sein muss. In diesem Fall können mehrere mobile Geräte Daten von der Überwachungseinrichtung gleichzeitig empfangen. Diese Ausgestaltung ist vor allem dann zweckmäßig, wenn durch ein mobiles Gerät Daten wie Temperaturen und Ende der Garzeit nur angezeigt werden, ohne dass über das mobile Gerät die Speisenzubereitung gesteuert werden könnte.

Dieses Versenden durch die Überwachungseinrichtung kann erst dann geschehen, wenn zuvor eine Verbindung zu einem mobilen Gerät aufgebaut worden ist. Diese Ausgestaltung ist vor allem dann zweckmäßig, wenn durch ein mobiles Gerät nicht nur Daten wie Temperaturen und Ende der Garzeit angezeigt werden können, sondern über das mobile Gerät die Speisenzubereitung oder das Überwachungseinrichtung auch gesteuert werden kann. So kann sichergestellt werden, dass nur ein zuvor durch das Verbinden autorisiertes mobiles Gerät ein Steuern der Speisenzubereitung und/oder des Überwachungseinrichtung ermöglicht.

Das Versenden von Daten von der Überwachungseinrichtung an ein oder mehrere mobile Geräte erfolgt vorzugsweise periodisch. Es werden also die Daten immer wieder erneut gesendet, wobei zwischen einem ersten und einem zweiten Versenden der Daten eine vorgegebene Zeitspanne liegt. Die vorgegebene Zeitspanne kann beispielsweise 1 Sekunde bis 10 Sekunden betragen. 2 bis 4 Sekunden sind besonders zweckmäßig, damit einerseits der Stromverbrauch gering gehalten werden kann und andererseits ein Benutzer nicht zu lange warten muss.

Das Versenden von Daten von der Überwachungseinrichtung kann auch an ein oder mehrere nicht mobile Geräte erfolgen. Daten können beispielsweise an eine zweite, nicht mobile Steuereinrichtung gesendet werden, damit die zweite Steuereinrichtung die erste Steuereinrichtung ersetzen kann. Es kann dann beispielsweise zwischen der zweiten Steuereinrichtung und der Überwachungseinrichtung eine ausschließliche Verbindung hergestellt werden. Die erste Steuereinrichtung kann dann beispielsweise Teil einer Küchenmaschine sein, die mithilfe eines Mischwerkzeugs und / oder Schneidwerkzeugs mit hohen Umdrehungszahlen von beispielsweise wenigstens 5000 oder 10000 Umdrehungen pro Minute Lebensmittel bearbeiten kann. Die zweite Steuereinrichtung kann dann beispielsweise Teil eines Rührgeräts sein, die mithilfe eines Mischwerkzeugs und / oder Schneidwerkzeugs nur mit niedrigen Umdrehungszahlen von beispielsweise nicht mehr als 1000 oder nicht mehr als 300 Umdrehungen pro Minute Lebensmittel bearbeiten kann. Ein Benutzer ist dann in der Lage, eine Küchenmaschine auszuschalten und nur noch mit dem Rührgerät die Zubereitung fortzusetzen, wenn die Küchenmaschine nicht mehr benötigt wird, sondern nur noch das Rührgerät.

Es ist aber auch möglich, dass für die Zubereitung einer Speise zwei gleiche nicht mobile Geräte eingesetzt werden, also zum Beispiel zwei Küchenmaschinen. Ein weiteres nicht mobiles Gerät ist dann ebenfalls eine Küchenmaschine.

Daten, die die Überwachungseinrichtung versenden kann, können Zustände umfassen, die durch die Überwachungseinrichtung überwacht werden. Die Daten können eine Angabe der Zeit umfassen, bei der ein Bearbeitungsschritt endet. Die Zeit kann beispielsweise in Form von Minuten und Sekunden angegeben werden, die noch bis zum Ende des Bearbeitungsschritts abzuwarten sind. Die Daten können einen Zustand des Überwachungseinrichtung umfassen wie zum Beispiel den Zustand einer Batterie des Überwachungseinrichtung. Die Daten können Informationen zur Identität des Überwachungseinrichtung umfassen wie zum Herstellerinformationen. Einem empfangenden Gerät kann so mitgeteilt werden, um welches Überwachungseinrichtung es sich handelt. Das empfangende Gerät kann in Abhängigkeit davon dann beispielsweise einstellen, was wie durch das empfangende Gerät dargestellt werden kann.

Das Verbinden zwischen dem Überwachungseinrichtung und der Steuereinrichtung und/oder das Verbinden zwischen dem Überwachungseinrichtung und dem vorzugsweise mobilen Gerät kann die Eingabe eines Schlüssels voraussetzen, um so Verbindungen zu autorisieren. Ein Schlüssel kann beispielsweise auf dem Überwachungseinrichtung in Form eines Buchstaben-/ Zahlencodes aufgedruckt sein oder auf einem Display des Überwachungseinrichtung angezeigt werden. Für ein Verbinden muss dann der Schlüssel bei der Steuereinrichtung bzw. bei dem vorzugsweise mobilen Gerät eingegeben werden.

In einer bevorzugten Ausgestaltung ist die Steuereinrichtung so eingerichtet, dass diese einen Schlüssel anzeigt, der bei dem vorzugsweise mobilen Gerät eingegeben werden muss, damit sich das vorzugsweise mobile Gerät mit der Überwachungseinrichtung verbinden kann. Die Steuereinrichtung kann diesen Schlüssel von der Überwachungseinrichtung angefordert und im Anschluss daran von der Überwachungseinrichtung erhalten haben. Die Steuereinrichtung kann diesen Schlüssel beispielsweise per Zufallsgenerator generiert und an die Überwachungseinrichtung gesendet haben. Durch diese Ausgestaltung kann weiter verbessert erreicht werden, dass nur autorisierte vorzugsweise mobile Geräte sich mit der Überwachungseinrichtung verbinden können.

Es kann genügen, dass der Schlüssel nur einmalig eingegeben werden muss. Ist also beispielsweise eine Verbindung zwischen der Steuereinrichtung und der Überwachungseinrichtung und/oder dem vorzugsweise mobilen Gerät und der Überwachungseinrichtung ein erstes Mal autorisiert worden, so erfordert ein erneutes Verbinden dann keine erneute Eingabe eines Schlüssels. Es kann sein, dass der Schlüssel für jeden Aufbau einer Verbindung eine erneute Eingabe eines Schlüssels erfordert. Zu bevorzugen ist, dass nur einmalig ein Schlüssel eingegeben werden muss.

Es kann sein, dass verschiedene Überwachungseinrichtungen als Teil des Systems vorhanden sind. Vorzugsweise gibt es dann nur einen Schlüssel für sämtliche Überwachungseinrichtungen, um das Verbinden nicht unnötig kompliziert zu gestalten. Es ist auch möglich, dass ein Schlüssel durch ein Programm angezeigt werden kann, dass auf dem vorzugsweise mobilen Gerät installiert ist. Diese Ausgestaltungen beruhen auf der Erkenntnis, dass ein recht einfacher Sicherheitsstandard genügt, um versehentliche Fehlbedienungen vermeiden zu können. Es kann sein, dass das Programm es ermöglicht, im Fall von mehreren Überwachungseinrichtungen eine auszuwählen.

Die Steuerung bzw. Steuereinrichtung und/oder das mobile Gerät können so eingerichtet sein, dass diese sich nicht nur mit der Überwachungseinrichtung verbinden können, sondern auch mit dem Küchengerät, mit dem eine durch das Überwachungseinrichtung überwachte Speise zubereitet wird. Dies kann eine Steuerung des Küchengeräts durch die Steuereinrichtung und/oder durch das vorzugsweise mobile Gerät ermöglichen. Der Automatisierungsgrad einer Speisenzubereitung kann so weiter verbessert werden.

In einer vorteilhaften Ausgestaltung ist das vorzugsweise mobile Gerät so eingerichtet, dass durch Aufrufen eines Programms oder erst nach Aufrufen eines Programms, das auf dem vorzugsweise mobilen Gerät installiert ist, Zustände vom Überwachungseinrichtung empfangen werden können und/oder eine Verbindung für ein Kommunizieren hergestellt wird oder hergestellt werden kann. Auf dem vorzugsweise mobilen Gerät kann also ein Programm installiert worden sein, das aufgerufen werden kann. Durch das Programm können dann vorteilhaft weitere Möglichkeiten zur Verfügung stehen, die das Zubereiten der Speise unterstützen.

Es kann beispielsweise sein, dass von der Überwachungseinrichtung übermittelte Daten aufgrund des Programms durch das vorzugsweise mobile Gerät nur angezeigt werden. Es kann sein, dass aufgrund des Programms ein laufender Bearbeitungsschritt der Speisenzubereitung gesteuert werden kann. Es kann sein, dass das aufgrund des Programms dem Überwachungseinrichtung erlaubt werden kann, Daten an weitere Geräte zu senden. Der Zubereitung einer Speise kann so weiter verbessert erleichtert werden.

Das vorzugsweise mobile Gerät kann so eingerichtet sein, dass es den Benutzer beispielsweise akustisch über einen Lautsprecher und/oder optisch über ein Display alarmiert, wenn eine überwachte Temperatur beziehungsweise ein überwachter Zustand einen vorgegebenen Schwellwert überschreitet und/oder einen vorgegebenen Schwellwert unterschreitet. Dadurch wird die Möglichkeit einer Abwesenheit weiter verbessert erleichtert. Der Lautsprecher und/oder das Display können Teil des vorzugsweise mobilen Gerätes sein.

Das Küchengerät, mit dem die Speise zubereitet wird, kann ein integriertes Thermometer aufweisen. Mit dem integrierten Thermometer können beispielsweise Temperaturen in einem Gargefäß oder Garraum des Küchengeräts gemessen werden. Das Küchengerät kann über eine Küchengerätsteuerung verfügen, um beispielsweise Temperaturen im Gargefäß oder Garraum des Küchengeräts steuern zu können, ohne dafür die Steuereinrichtung verwenden zu müssen.

Die Überwachungseinrichtung, die Steuereinrichtung und/oder das vorzugsweise mobile Gerät können jeweils eine Funkeinheit umfassen, um drahtlos Daten senden und/oder empfangen zu können. Vorzugsweise kommunizieren Überwachungseinrichtung, Steuereinrichtung und das vorzugsweise mobile Gerät drahtlos miteinander.

Um einer Speise für eine Zubereitung Wärme zuführen zu können, können gemäß der vorliegenden Erfindung Küchengeräte mit einer Heizeinrichtung wie zum Beispiel Ofen oder Pizzaofen, Mikrowelle, Dampfgarer, Kochstelle mit Kochgefäß, Küchenmaschine oder Grill eingesetzt werden.

Steuereinrichtung, mobiles und/oder nicht mobiles Gerät, Küchengerät und Überwachungseinrichtung sind voneinander unabhängig, also nicht körperlich verbunden.

Das System kann mehr als ein mobiles Gerät, ein Küchengerät und/oder eine Überwachungseinrichtung umfassen.

Die Überwachungseinrichtung ist vorzugsweise ein Speisenthermometer mit einer Spitze und mit zwei Temperatursensoren. Ein Temperatursensor ist bei der Spitze des Speisenthermometers angeordnet. Der andere Temperatursensor weist einen Abstand zur Spitze auf. Dieser Abstand zur Spitze beträgt insbesondere wenigstens 5 cm, damit die Temperatur im Inneren einer Speise und außerhalb einer Speise gemessen werden kann.

Die Erfindung betrifft auch eine Steuereinrichtung, die wie zuvor beschrieben eingerichtet ist. Die Erfindung betrifft auch eine Überwachungseinrichtung, die wie zuvor beschrieben eingerichtet ist. Die Erfindung betrifft auch ein mobiles Gerät, das wie zuvor beschrieben eingerichtet ist.

Die Erfindung betrifft ein Verfahren für die Zubereitung einer Speise mit dem zuvor beschriebenen System. Zu Beginn einer Zubereitung einer Speise ist die Überwachungseinrichtung ausschließlich mit der Steuereinrichtung für ein Kommunizieren so verbunden, dass die Überwachungseinrichtung dann nicht mit dem mobilen Gerät für ein Kommunizieren verbunden werden kann. Es wird dadurch vermieden, dass bereits zu Beginn einer Speisenzubereitung unkontrolliert, so zum Beispiel versehentlich, auf das System durch ein mobiles Gerät Einfluss genommen werden kann. Das Verbinden kann automatisiert erfolgen, sobald Steuereinrichtung und Überwachungseinrichtung eingeschaltet worden sind.

Nachfolgend wird die Erfindung anhand von Figuren näher erläutert.

Es zeigen
- Figur 1:: stiftförmiges Speisenthermometer während einer Speisenzubereitung in einem Küchengerät;
- Figur 2:: Küchenmaschine;
- Figur 3:: mobiles Gerät;
- Figur 4:: System mit Verbindung zwischen Küchenmaschine und Überwachungseinrichtung;
- Figur 5:: System mit an mehrere Geräte sendende Überwachungseinrichtung;
- Figur 6:: System mit Verbindung zwischen mobilem Gerät und Überwachungseinrichtung;
- Figur 7:: System mit an mehrere Geräte sendende Überwachungseinrichtung;
- Figur 8:: System einer zweiten Ausführungsform mit Verbindung zwischen Küchenmaschine und Überwachungseinrichtung.

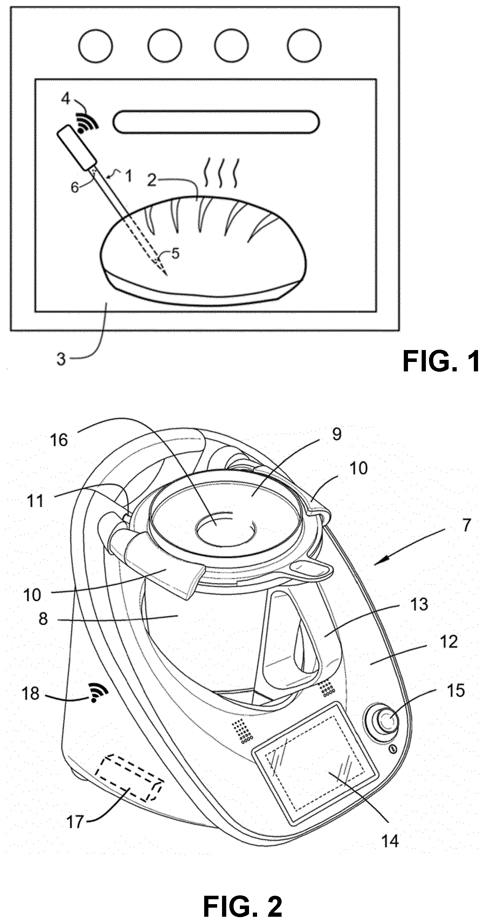

Die Figur 1 zeigt eine Überwachungseinrichtung. Die Überwachungseinrichtung ist ein stiftförmiges Speisenthermometer 1, welches mit seiner Spitze in einen Brotteig 2 hineingesteckt ist. Der Brotteig 2 befindet sich in einem Küchengerät. Das Küchengerät ist ein Backofen 3. Der Brotteig 2 wird im Backofen 3 erhitzt. Das Speisenthermometer 1 bestimmt räumlich aufgelöst Temperaturen im Backofen, die mithilfe von zwei Temperatursensoren 5 und 6 sowohl außerhalb des Brotteigs als auch innerhalb des Brotteigs ermittelt werden. Diese ermittelten Temperaturen werden durch eine Funkeinheit 4 an eine externe Steuereinrichtung oder an ein mobiles Gerät gesendet. Durch die Steuereinrichtung wird die Brotzubereitung gesteuert. Dies kann durch eine unmittelbare Steuerung der Temperatur des Backofens 3 geschehen oder aber durch Anweisungen an einen Benutzer, wie die Temperatur des Backofens, die Art der Temperaturzuführung und / oder die Anordnung des Brots innerhalb des Backofens zu verändern ist. Mit Art der Temperaturzuführung sind Auswahlmöglichkeiten wie Oberhitze, Unterhitze oder Umluft gemeint. Mit Anordnung ist gemeint, wo im Backofen 3 sich der Brotteig 2 befinden soll. Durch das mobile Gerät können zumindest die ermittelten Temperaturen angezeigt und folglich überwacht werden.

Die Figur 2 zeigt eine Küchenmaschine 7 mit einem Speisenzubereitungsgefäß 8. Auf dem Speisenzubereitungsgefäß 8 ist ein Deckelteil 9 aufgesetzt. Das Deckelteil 9 für das Speisenzubereitungsgefäß 8 ist durch armartige Verriegelungselemente, also Arme 10, verriegelt. Das Deckelteil 9 befindet sich zwischen den beiden Armen 10. Die Arme 10 können um ihre Längsachse motorisiert gedreht werden und so hin und her zwischen einer Öffnungsstellung und einer Verriegelungsstellung. Das Deckelteil 9 hat einen Sensor und zwar einen Kipphebel 11 eines elektrischen Schalters heruntergedrückt und so ausgelöst. Die armartigen Verriegelungselemente 10 und der Kipphebel 11 sind an einem Standteil 12 der Küchenmaschine 7 angebracht. Dass Speisenzubereitungsgefäß 8 ist in das Standteil 12 eingesetzt und kann aus dem Standteil 12 herausgenommen werden. Um das Speisenzubereitungsgefäß 8 herausnehmen zu können, umfasst dieses einen Griff 13. Das Standteil 12 umfasst zur Bedienung ein berührungsempfindliches Display 14 und einen Drehschalter 15. Der Drehschalter 15 kann gedreht und gedrückt werden. Display 14 und Drehschalter 15 sind also Bedienelemente der Küchenmaschine 7. Das Deckelteil 9 umfasst mittig eine Öffnung 16, die mit einem gefäßartigen Verschluss verschlossen werden kann.

Im Standteil 12 befindet sich eine Steuereinrichtung 17. Über die Bedienelemente 14 und 15 können Daten in die Steuereinrichtung eingegeben werden. Im Standteil 12 befindet sich eine Funkeinheit 18, über die drahtlos Daten gesendet und empfangen werden können. Über die Funkeinheit 18 kann die Steuereinrichtung 17 auf ein extern gespeichertes Rezept zugreifen. Im Anschluss daran kann die Steuereinrichtung 17 mithilfe des Rezepts die Zubereitung einer Speise steuern. Über die Funkeinheit 18 kann die Steuereinrichtung 17 mit dem Speisenthermometer 1 drahtlos Daten austauschen, also kommunizieren.

Im Speisenzubereitungsgefäß 8 befindet sich ein Schneidwerkzeug, das mit einem Motor angetrieben werden kann. Der Motor befindet sich im Standteil 12. Im Grund des Speisenzubereitungsgefäßes 8 ist eine Heizeinrichtung vorhanden, die mit dem Standteil 12 für ein Erhitzen stromleitend verbunden werden kann.

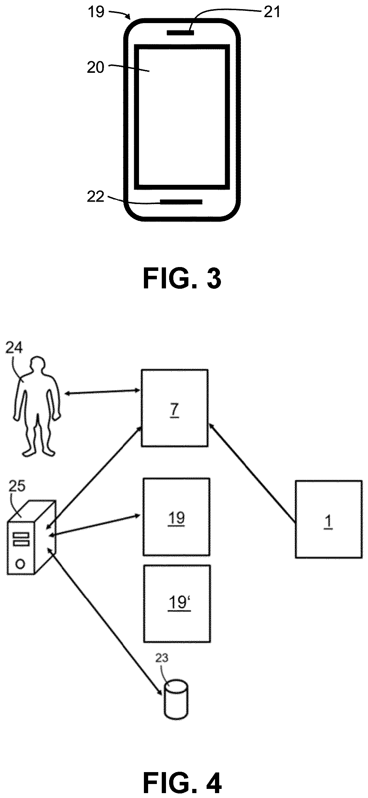

Die Figur 3 zeigt ein mobiles Gerät. Das mobile Gerät ist ein Smartphone 19. Das Smartphone 19 umfasst ein berührungsempfindliches Display 20, einen Lautsprecher 21 und ein Mikrofon 22. Das Smartphone umfasst eine Funkeinheit. Über die Funkeinheit kann das Smartphone 19 Daten mit dem Thermometer 1 austauschen. Die Funkeinheit kann u.a. Wifi, Bluetooth Low Energy und/oder Ultra Wideband (UWB) als Standard umfassen.

Die Figur 4 zeigt das erfindungsgemäße System. Das System umfasst einen Lautsprecher-Assistenten 23. Dargestellt ist ein Benutzer 24 und ein externer Computer 25. Die Küchenmaschine 7 ist mit dem Computer 25 beispielsweise über das Internet so verbunden, dass Daten zwischen dem Computer 25 und der Küchenmaschine 7 ausgetauscht werden können. Auf dem Computer sind Rezepte elektronisch gespeichert. Der Benutzer 24 kann sich die Rezepte auf dem Display der Küchenmaschine anzeigen lassen und ein Rezept auswählen. Alternativ oder ergänzend können Rezepte in einem Speicher der Küchenmaschine 7 gespeichert sein.

Auf dem ersten Smartphone 19 kann ein Programm installiert sein, dass ebenfalls wie durch den Doppelpfeil angedeutet eine Verbindung zu dem Computer 25 aufbauen kann bzw. aufgebaut hat. Das erste Smartphone 19 kann ein Smartphone des Benutzers 24 sein. Ein Rezept kann daher auch über das erste Smartphone 19 durch den Benutzer 24 ausgewählt werden. Das erste Smartphone ist Teil des erfindungsgemäßen Systems.

Außerdem kann der Lautsprecher-Assistent 23 mit dem Computer 25 verbunden sein. Beispielsweise kann dann ein Rezept von dem Benutzer 24 ausgewählt werden. Das Auswählen kann beispielsweise durch Spracherkennung geschehen.

Das Thermometer 1 ist ausschließlich mit der Küchenmaschine 7 so verbunden, dass die Steuereinrichtung der Küchenmaschine 7 Daten mit dem Thermometer 1 austauschen kann. Der Austausch von Daten ist so, dass dies zur Steuerung der Zubereitung einer Speise beiträgt. Das Thermometer 1 kann keine Daten an andere Geräte so senden, dass ein anderes Gerät Daten zu einer Zubereitung einer Speise beitragen kann. Insbesondere kann keine Verbindung zwischen dem Thermometer 1 und einem anderen Gerät aufgebaut werden, die ein Austausch von Daten so erlauben würde, dass dies zur Zubereitung einer Speise beitragen kann.

Durch einen Statusindikator kann erreicht werden, dass die Steuereinrichtung der Küchenmaschine 7 ausschließlich mit dem Speisenthermometer 1 verbunden ist und keine weitere Verbindung aufgebaut werden kann. Statusindikatoren werden auch "Flags" genannt. Es kann beispielsweise bei der Elektronik des Speisenthermometers 1 ein Statusindikator vorhanden sein, der so gesetzt ist, dass das Speisenthermometer 1 nicht frei für andere Verbindungen ist. Ein weiterer Statusindikator kann vorhanden und so gesetzt sein, dass das Speisenthermometer nicht frei für ein Steuern ist.

Das Thermometer 1 kann an die Steuereinrichtung der Küchenmaschine 7 ermittelte Temperaturen senden oder zumindest ein Maß für ermittelte Temperaturen. Das Thermometer 1 kann an die Küchenmaschine 7 ermittelte Herstellerinformationen senden, damit die Steuereinrichtung 1 weiß, wie sie erhaltene Daten interpretieren und auswerten kann.

Zu den Daten, die von dem Thermometer 1 an die Steuereinrichtung der Küchenmaschine 7 gesendet werden, kann ein Universally Unique Identifier (UUID) und/oder ein Name gehören. Der Name kann beispielsweise durch den Benutzer 24 ausgewählt worden sein, um das Thermometer 1 leicht identifizieren zu können.

Es kann noch ein zweites Smartphone 19' geben. Dieses ist mit keinem anderen Gerät verbunden und kann mit keinem anderen Gerät verbunden werden, wenn kein geeignetes Programm auf dem zweiten Smartphone 19' installiert und aufgerufen ist. Dieses zweite Smartphone 19' ist daher dann nicht Teil des erfindungsgemäßen Systems. Dies schließt nicht aus, dass das zweite Smartphone 19' Teil des Systems werden kann.

Es wird beispielsweise wie durch die Figur 1 angedeutet ein Brot mithilfe eines Rezepts gesteuert durch die Steuereinrichtung der Küchenmaschine 7 zubereitet. Nachdem der Brotteig 2 zubereitet und in den Backofen 3 wie in der Figur 1 gezeigt gestellt worden ist, ist im Rezept schließlich vermerkt, dass die Steuereinrichtung der Küchenmaschine 7 nicht länger benötigt wird. Im Anschluss daran legt die Steuereinrichtung der Küchenmaschine 7 Nutzdaten fest, die das Thermometer zukünftig versendet. Diese Nutzdaten werden auch "Payload" genannt. Außerdem legt die Steuerung der Küchenmaschine 7 beispielsweise fest, dass das Speisenthermometer 1 die Nutzdaten und damit Daten auch an andere Geräte so versenden kann, dass andere Geräte die Daten so empfangen können, dass diese von anderen Geräten genutzt werden können. Ist ein anderes Gerät beispielsweise in der Lage, die Daten zumindest teilweise beispielsweise auf einem Display darzustellen oder akustisch auszugeben, dann kann ein anderes Gerät die Daten nutzen. Zu den Daten gehören im Fall des Speisenthermometers 1 insbesondere Temperaturen, die vom Speisenthermometer 1 ermittelt werden.

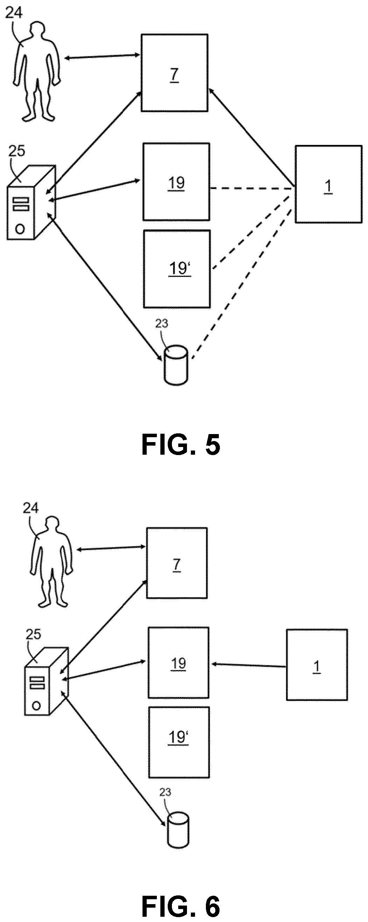

Im Anschluss daran versendet das Speisenthermometer 1 wie in der Figur 5 durch gestrichelte Linien angedeutet Daten auch an andere Geräte. Es kann sein, dass andere Geräte dann die Daten zumindest teilweise so empfangen können, dass diese Nutzdaten optisch und/oder akustisch ausgeben können. Es kann sein, dass das Versenden von Daten es einem anderen Gerät lediglich ermöglicht, eine ausschließliche Verbindung zu der Steuereinrichtung der Küchenmaschine 7 herzustellen. Es kann nach wie vor eine Verbindung zwischen der Steuereinrichtung der Küchenmaschine 7 und dem Speisenthermometer 7 geben, der eine Kommunikation so erlaubt, dass beispielsweise Nutzdaten noch einmal verändert werden. Es kann aber auch sein, dass diese Verbindung unterbrochen worden ist.

Ein anderes Gerät, so zum Beispiel wie in der Figur 6 gezeigt das erste Smartphone 19, stellt beispielsweise nun eine ausschließliche Verbindung zu der Steuereinrichtung der Küchenmaschine 7 her. An alle anderen Geräte werden dann keine Daten mehr gesendet, die von anderen Geräten empfangen und genutzt werden können. Insbesondere gibt es nun auch keine Verbindung zwischen der Steuereinrichtung der Küchenmaschine 7 und dem Speisenthermometer 1. Das erste Smartphone 19 erhält nun von dem Speisenthermometer 1 zumindest die Nutzdaten, die von der Steuerung der Küchenmaschine 7 festgelegt worden sind. Das Verbinden zwischen dem Speisenthermometer 1 und dem ersten Smartphone 19 kann durch ein Programm erfolgt sein, dass auf dem ersten Smartphone 19 installiert und aufgerufen worden ist. Das Verbinden kann die Eingabe einer Buchtstaben und/oder Zahlenkombination, also eines Schlüssels, umfasst haben, die zuvor von der Küchenmaschine 7 akustisch und/oder optisch ausgegeben worden ist.

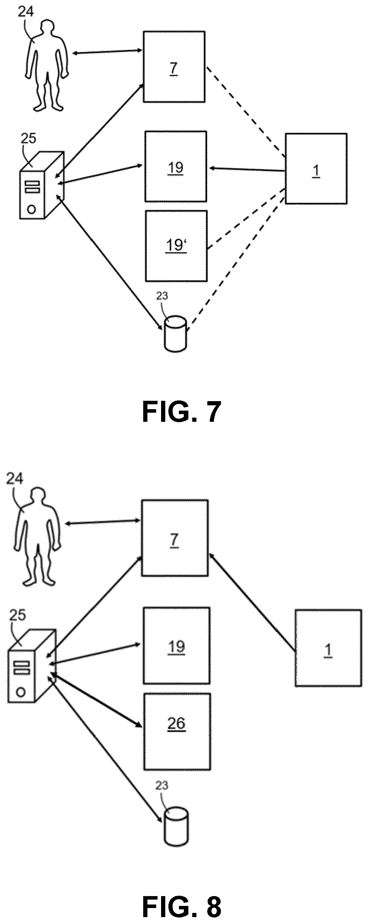

Es kann auch möglich sein, dass der Benutzer 24 auf dem ersten Smartphone 19 einstellen kann, dass Daten und zwar insbesondere die Nutzdaten so an andere Geräte gesendet werden, dass andere Geräte gesendete Daten zumindest teilweise lesen und ausgeben können. Diese Situation ist in der Figur 7 dargestellt. Es kann auch möglich sein, dass der Benutzer 24 auf dem ersten Smartphone 19 einstellen kann, dass Daten so an andere Geräte gesendet werden, dass ein anderes Gerät eine ausschließliche Verbindung herstellen kann. Bei Bedarf könnte beispielsweise wieder eine ausschließliche Verbindung zwischen der Steuerung der Küchenmaschine 7 und dem Speisenthermometer 1 hergestellt werden.

In der Figur 8 wird ein System gezeigt, dass eine zweite Steuereinrichtung 26 zeigt. Die zweite Steuereinrichtung 26 kann dafür bestimmt und geeignet sein, die Steuerung von der ersten Steuereinrichtung 17 zu übernehmen, wenn die erste Steuereinrichtung beispielsweise abgeschaltet wird. Die erste Steuereinrichtung kann dann Teil einer Küchenmaschine sein, die abgeschaltet wird. Die zweite Steuereinrichtung kann dann Teil eines anderen nicht mobilen Küchengeräts sein.

## Patentansprüche

1. System für die Zubereitung einer Speise (2) mit einer Überwachungseinrichtung (1) für die Überwachung der Speise (2) während ihrer Zubereitung, mit einer Steuereinrichtung (17) für die Zubereitung der Speise (2) mithilfe eines Küchengeräts (3) und mithilfe eines elektronisch gespeicherten Rezepts, mit einem mobilen Gerät (19, 23) und/oder mit einem nicht mobilen Gerät (26), wobei die Überwachungseinrichtung (1) mit der Steuereinrichtung (17) und dem mobilen Gerät (19, 23) und/oder mit dem nicht mobilen Gerät (26) kommunizieren kann, wobei das mobile Gerät (19, 23) und/oder das nicht mobile Gerät (26) so eingerichtet ist, dass dieses Informationen der Überwachungseinrichtung (1) an einen Benutzer (24) übermitteln kann,
**dadurch gekennzeichnet, dass** die Steuereinrichtung (17) so eingerichtet ist, dass diese während der gesteuerten Zubereitung einer Speise (2) mögliche Abwesenheitszeiten für einen Benutzer (24) erkennt, indem die Steuereinrichtung (17) Bearbeitungsschritte des Rezepts auswertet und so erkennt, sobald die Anwesenheit des Benutzers (24) für die Zubereitung der Speise (2) nicht erforderlich ist, und den Benutzer (24) darüber informiert.

2. System nach einem der vorhergehenden Ansprüche, **dadurch gekennzeichnet, dass** die Überwachungseinrichtung ein mobil verwendbares Speisenthermometer (1) mit einer Funkeinheit (4) ist.

3. System nach einem der vorhergehenden Ansprüche, **dadurch gekennzeichnet, dass** das System eine Küchenmaschine (7) umfasst und die Steuereinrichtung (17) in die Küchenmaschine (7) integriert ist, wobei die Küchenmaschine (7) ein Speisenzubereitungsgefäß (8) umfasst, das in ein Standteil (12) der Küchenmaschine (7) eingesetzt werden kann, und ein Misch- und/oder Schneidwerkzeug, das in dem Speisenzubereitungsgefäß befindliche Lebensmittel mischen und/oder zerkleinern kann.

4. System nach einem der vorhergehenden Ansprüche, **dadurch gekennzeichnet, dass** das System so eingerichtet ist, dass die Überwachungseinrichtung (1) ausschließlich mit der Steuereinrichtung (17) für ein Kommunizieren so verbunden sein kann, dass die Überwachungseinrichtung (1) erst mit dem mobilen Gerät (19, 23) und/oder mit dem nicht mobilen Gerät (26) für ein Kommunizieren verbunden werden kann, wenn die Steuereinrichtung (17) dies freigibt.

5. System nach dem vorhergehenden Anspruch, **dadurch gekennzeichnet, dass** die Steuereinrichtung (17) so eingerichtet ist, dass diese es ermöglicht, dass sich das mobile Gerät (19, 23) und/oder das nicht mobile Gerät (26) mit der Überwachungseinrichtung (1) für ein Kommunizieren verbindet oder dass das mobile Gerät (19, 23) und/oder das nicht mobile Gerät (26) Daten von der Überwachungseinrichtung (1) empfangen kann, nachdem die Steuereinrichtung (17) während der gesteuerten Zubereitung einer Speise (2) eine mögliche Abwesenheitszeit für einen Benutzer (24) erkannt hat, oder nachdem die Steuereinrichtung (17) während der gesteuerten Zubereitung einer Speise (2) eine mögliche Abwesenheitszeit für einen Benutzer (24) erkannt hat und der Benutzer (24) eine Freigabe durch Betätigen eines Bedienelements der Steuereinrichtung (17) bestätigt hat, oder wenn die Steuereinrichtung (17) ausgeschaltet wird.

6. System nach dem vorhergehenden Anspruch, **dadurch gekennzeichnet, dass** das System so eingerichtet ist, dass die Verbindung zwischen der Steuereinrichtung (17) und der Überwachungseinrichtung (1) beendet wird, wenn die Möglichkeit freigegeben wird, dass sich die Überwachungseinrichtung (1) mit dem mobilen Gerät (19, 23) und/oder mit dem nicht mobilen Gerät (26) verbinden kann und/oder dass die Überwachungseinrichtung (1) Daten an das mobile Gerät (19, 23) und/oder das nicht mobile Gerät (26) senden kann.

7. System nach einem der vorhergehenden Ansprüche, **dadurch gekennzeichnet, dass** die Steuereinrichtung (17) so eingerichtet ist, dass diese steuern kann, welche Daten die Überwachungseinrichtung (1) sendet.

8. System nach dem vorhergehenden Anspruch, **dadurch gekennzeichnet, dass** die Steuereinrichtung (17) so eingerichtet ist, dass diese eine Information an die Überwachungseinrichtung (1) so übermitteln kann, dass die Überwachungseinrichtung (1) die Information im Anschluss daran versendet.

9. System nach einem der vorhergehenden Ansprüche, **dadurch gekennzeichnet, dass** die Überwachungseinrichtung (1) ein oder mehrere der folgenden Daten versenden kann:
• ein oder mehrere Zustände, die von der Überwachungseinrichtung (1) überwacht werden;
• Angabe einer Zeit bis zur Beendigung eines Bearbeitungsschritts;
• ein oder mehrere Zustände der Überwachungseinrichtung (1).

10. System nach einem der vorhergehenden Ansprüche, **dadurch gekennzeichnet, dass** eine Verbindung zwischen der Überwachungseinrichtung (1) und dem mobilen Gerät (19, 23) und/oder dem nicht mobilen Gerät (26) die Eingabe eines Schlüssels voraussetzt, der von der Steuereinrichtung (17) angezeigt wird und/oder von der Überwachungseinrichtung (1) versendet wird.

11. Speisenthermometer (1), das so eingerichtet ist, dass dieses mit einer Steuereinrichtung (17) und einem mobilen und/oder nicht mobilen Gerät (19, 23; 26) drahtlos kommunizieren kann, und das so eingerichtet ist, dass dieses von der Steuereinrichtung (17) Daten erhalten kann, die im Anschluss daran von dem Speisenthermometer (1) an das mobile und/oder nicht mobile Gerät (19, 23; 26) versendet werden können.

12. Speisenthermometer (1) nach dem vorhergehenden Anspruch mit einer Spitze und zwei Temperatursensoren (5, 6), wobei der eine Temperatursensor (5) bei der Spitze angeordnet ist und der andere Temperatursensor (6) einen Abstand von wenigstens 5 cm von der Spitze aufweist.

13. Speisenthermometer (1) nach einem der zwei vorhergehenden Ansprüche, **dadurch gekennzeichnet, dass** das Speisenthermometer (1) eine Funkeinheit mit Bluetooth umfasst.

14. Verfahren für die Zubereitung einer Speise (2) mit einem System nach einem der vorhergehenden Ansprüche 1 bis 10, **dadurch gekennzeichnet, dass** zu Beginn einer Zubereitung einer Speise (2) die Überwachungseinrichtung (1) ausschließlich mit der Steuereinrichtung (17) für ein Kommunizieren so verbunden ist, dass die Überwachungseinrichtung (1) dann nicht mit dem mobilen und/oder nicht mobilen Gerät (19, 23; 26) für ein Kommunizieren verbunden werden kann.

## Claims

1. System for the preparation of a food (2), comprising a monitoring device (1) for monitoring the food (2) during its preparation, a control device (17) for the preparation of the food (2) by means of a kitchen appliance (3) and by means of an electronically stored recipe, and a mobile device (19, 23) and/or a non-mobile device (26), wherein the monitoring device (1) is able to communicate with the control device (17) and the mobile device (19, 23) and/or with the non-mobile device (26), wherein the mobile device (19, 23) and/or the non-mobile device (26) is configured such that it is able to transmit information of the monitoring device (1) to a user (24), **characterized in that** the control device (17) is configured such that during the controlled preparation of a food (2) it recognizes possible absence times for a user (24), by the control device (17) evaluating processing steps of the recipe and thus recognizing when the presence of the user (24) is not required for the preparation of the food (2), and informs the user (24) about it.

2. System according to one of the preceding claims, **characterized in that** the monitoring device is a mobile-use food thermometer (1) with a radio unit (4).

3. System according to one of the preceding claims, **characterized in that** the system comprises a food processor (7) and the control device (17) is integrated in the food processor (7), wherein the food processor (7) comprises a food preparation vessel (8) which can be inserted in a stand part (12) of the food processor (7), and a mixing and/or chopping tool which can mix and/or chop foods present in the food preparation vessel.

4. System according to one of the preceding claims, **characterized in that** the system is configured such that the monitoring device (1) can be exclusively connected to the control device (17) for communication in such a way that the monitoring device (1) can only be connected to the mobile device (19, 23) and/or to the non-mobile device (26) for communication when the control device (17) releases this.

5. System according to the preceding claim, **characterized in that** the control device (17) is configured such that it enables the mobile device (19, 23) and/or the non-mobile device (26) to connect to the monitoring device (1) for communication or that the mobile device (19, 23) and/or the non-mobile device (26) is able to receive data from the monitoring device (1), after the control device (17) has detected a possible absence time for a user (24) during the controlled preparation of a food (2), or after the control device (17) has detected a possible absence time for a user (24) during the controlled preparation of a food (2) and the user (24) has confirmed a release by operating a control element of the control device (17), or when the control device (17) is turned off.

6. System according to the preceding claim, **characterized in that** the system is configured such that the connection between the control device (17) and the monitoring device (1) is terminated when the possibility is released that the monitoring device (1) can connect to the mobile device (19, 23) and/or to the non-mobile device (26) and/or that the monitoring device (1) can transmit data to the mobile device (19, 23) and/or to the non-mobile device (26).

7. System according to one of the preceding claims, **characterized in that** the control device (17) is configured such that it is able to control which data the monitoring device (1) transmits.

8. System according to the preceding claim, **characterized in that** the control device (17) is configured such that it can transmit information to the monitoring device (1) in such a way that the monitoring device (1) subsequently sends the information.

9. System according to one of the preceding claims, **characterized in that** the monitoring device (1) is able to send one or more of the following data:
· one or more conditions monitored by the monitoring device (1);
• indication of a time until completion of a processing step;
• one or more conditions of the monitoring device (1).

10. System according to one of the preceding claims, **characterized in that** a connection between the monitoring device (1) and the mobile device (19, 23) and/or the non-mobile device (26) requires the input of a key which is displayed by the control device (17) and/or sent by the monitoring device (1).

11. Food thermometer (1), configured such that it is able to communicate wirelessly with a control device (17) and a mobile and/or non-mobile device (19, 23; 26), and configured such that it can receive data from the control device (17) which can subsequently be sent from the food thermometer (1) to the mobile and/or non-mobile device (19, 23; 26).

12. Food thermometer (1) according to the preceding claim, having a tip and two temperature sensors (5, 6), wherein one temperature sensor (5) is located at the tip and the other temperature sensor (6) is at a distance of at least 5 cm from the tip.

13. Food thermometer (1) according to one of the two preceding claims, **characterized in that** the food thermometer (1) comprises a radio unit with Bluetooth.

14. Method for the preparation of a food (2) using a system according to one of the preceding claims 1 to 10, **characterized in that** at the beginning of a preparation of a food (2) the monitoring device (1) is exclusively connected to the control device (17) for communication in such a way that the monitoring device (1) then cannot be connected to the mobile and/or non-mobile device (19, 23; 26) for communication.

## Revendications

1. Système pour la préparation d'un aliment (2) comprenant un dispositif de surveillance (1) pour la surveillance de l'aliment (2) pendant sa préparation, un dispositif de commande (17) pour la préparation de l'aliment (2) à l'aide d'un appareil de cuisine (3) et à l'aide d'une recette stockée électroniquement, avec un appareil mobile (19, 23) et/ou avec un appareil non mobile (26), dans lequel le dispositif de surveillance (1) peut communiquer avec le dispositif de commande (17) et l'appareil mobile (19, 23) et/ou avec l'appareil non mobile (26), dans lequel l'appareil mobile (19, 23) et/ou l'appareil non mobile (26) est configuré de sorte que celui-ci peut transmettre des informations du dispositif de surveillance (1) à un utilisateur (24),
**caractérisé en ce que** le dispositif de commande (17) est configuré de sorte que celui-ci reconnaît, pendant la préparation commandée d'un aliment (2), des temps d'absence possibles pour un utilisateur (24), **en ce que** le dispositif de commande (17) évalue des étapes de traitement de la recette et reconnaît ainsi dès que la présence de l'utilisateur (24) n'est pas nécessaire pour la préparation de l'aliment (2), et en informe l'utilisateur (24).

2. Système selon l'une des revendications précédentes, **caractérisé en ce que** le dispositif de surveillance est un thermomètre à aliments (1) utilisable de manière mobile avec une unité radio (4).

3. Système selon l'une des revendications précédentes, **caractérisé en ce que** le système comprend une machine de cuisine (7) et le dispositif de commande (17) est intégré à la machine de cuisine (7), dans lequel la machine de cuisine (7) comprend un récipient de préparation d'aliments (8) qui peut être inséré dans une partie de stand (12) de la machine de cuisine (7) et un outil de mélange et/ou de coupe qui peut mélanger et/ou hacher des aliments présents dans le récipient de préparation d'aliments.

4. Système selon l'une des revendications précédentes, **caractérisé en ce que** le système est configuré de sorte que le dispositif de surveillance (1) peut être connecté exclusivement au dispositif de commande (17) pour une communication de sorte que le dispositif de surveillance (1) ne peut être connecté à l'appareil mobile (19, 23) et/ou à l'appareil non mobile (26) pour une communication que lorsque le dispositif de commande (17) le permet.

5. Système selon la revendication précédente, **caractérisé en ce que** le dispositif de commande (17) est configuré de sorte que celui-ci permet à l'appareil mobile (19, 23) et/ou à l'appareil non mobile (26) de se connecter au dispositif de surveillance (1) pour communiquer ou à l'appareil mobile (19, 23) et/ou à l'appareil non mobile (26) de recevoir des données du dispositif de surveillance (1), après que le dispositif de commande (17) a détecté un temps d'absence possible pour un utilisateur (24) pendant la préparation commandée d'un aliment (2), ou après que le dispositif de commande (17) a détecté un temps d'absence possible pour un utilisateur (24) pendant la préparation commandée d'un aliment (2) et que l'utilisateur (24) a confirmé une autorisation en actionnant un élément de commande du dispositif de commande (17), ou lorsque le dispositif de commande (17) est mis hors tension.

6. Système selon la revendication précédente, **caractérisé en ce que** le système est configuré de sorte que la connexion entre le dispositif de commande (17) et le dispositif de surveillance (1) est interrompue lorsque la possibilité est autorisée que le dispositif de surveillance (1) peut se connecter à l'appareil mobile (19, 23) et/ou à l'appareil non mobile (26) et/ou que le dispositif de surveillance (1) peut envoyer des données à l'appareil mobile (19, 23) et/ou à l'appareil non mobile (26).

7. Système selon l'une des revendications précédentes, **caractérisé en ce que** le dispositif de commande (17) est configuré pour pouvoir commander quelles données sont envoyées par le dispositif de surveillance (1).

8. Système selon la revendication précédente, **caractérisé en ce que** le dispositif de commande (17) est configuré pour pouvoir transmettre une information au dispositif de surveillance (1) de sorte que, à la suite de cela, le dispositif de surveillance (1) envoie l'information.

9. Système selon l'une des revendications précédentes, **caractérisé en ce que** le dispositif de surveillance (1) peut envoyer une ou plusieurs des données suivantes :
• un ou plusieurs états, qui sont surveillés par le dispositif de surveillance (1) ;
• une indication d'un temps jusqu'à la fin d'une étape de traitement ;
• un ou plusieurs états du dispositif de surveillance (1).

10. Système selon l'une des revendications précédentes, **caractérisé en ce qu'**une connexion entre le dispositif de surveillance (1) et l'appareil mobile (19, 23) et/ou l'appareil non mobile (26) nécessite l'introduction d'une clé qui est affichée par le dispositif de commande (17) et/ou est envoyée par le dispositif de surveillance (1).

11. Thermomètre à aliments (1) configuré de sorte que celui-ci peut communiquer sans fil avec un dispositif de commande (17) et un appareil mobile et/ou non mobile (19, 23 ; 26), et configuré de sorte que celui-ci peut recevoir des données du dispositif de commande (17), qui, à la suite de cela, peuvent être envoyées par le thermomètre à aliments (1) à l'appareil mobile et/ou non mobile (19, 23 ; 26).

12. Thermomètre à aliments (1) selon la revendication précédente avec une pointe et deux capteurs de température (5, 6), dans lequel l'un capteur de température (5) est disposé près de la pointe et l'autre capteur de température (6) présente une distance d'au moins 5 cm de la pointe.

13. Thermomètre à aliments (1) selon l'une des deux revendications précédentes, **caractérisé en ce que** le thermomètre à aliments (1) comprend une unité radio avec Bluetooth.

14. Procédé pour la préparation d'un aliment (2) avec un système selon l'une des revendications précédentes 1 à 10, **caractérisé en ce qu'**au début d'une préparation d'un aliment (2), le dispositif de surveillance (1) est connecté exclusivement au dispositif de commande (17) pour une communication, de sorte que le dispositif de surveillance (1) ne peut alors pas être connecté à l'appareil mobile et/ou non mobile (19, 23 ; 26) pour une communication.
